Europäisches Patentamt

European Patent Office

Office européen des brevets

(11) Publication number: **0 489 309 A2**

# EUROPEAN PATENT APPLICATION

(21) Application number: **91119820.8**

(22) Date of filing: **21.11.91**

(51) Int. Cl.5: **G02B 21/34**, G01N 21/00

(30) Priority: **03.12.90 US 621204**

(43) Date of publication of application:
**10.06.92 Bulletin 92/24**

(84) Designated Contracting States:
**BE CH DE DK ES FR GB IT LI NL SE**

(71) Applicant: **TECHNICON INSTRUMENTS CORPORATION**
**511 Benedict Avenue**
**Tarrytown, New York 10591-5097(US)**

(72) Inventor: **Intraub, Julius**
**8 Holly Lane**
**Plainview, New York 11803(US)**

(74) Representative: **Kirchner, Dietrich, Dr. et al**
**c/o BAYER AG Konzernverwaltung RP**
**Patentabteilung**
**W-5090 Leverkusen, Bayerwerk(DE)**

(54) Antireflection coated substrate for analytical slides.

(57) An antireflection coated substrate for analytical slides used in automated clinical analyzers comprises a planar transparent support for an analytical slide having on one major surface thereof an antireflection coating adapted to minimize reflection at an air-substrate interface and on the other major surface thereof a second antireflection coating adapted to minimize reflection at an analytical solution-substrate interface. Analytical slides comprise the antireflection coated substrate and one or more layers superimposed on the substrate which contain analytical reagents for developing a color when contacted with an analyte in a sample solution.

FIG. 3

EP 0 489 309 A2

## BACKGROUND OF THE INVENTION

### 1. Field of the Invention:

This invention relates to analytical slides for use in automated clinical analyzers, and more particularly to slides having a substrate provided with an antireflection coating.

### 2. Description of the Prior Art:

In a common type of automated apparatus used in clinical laboratories for conducting chemical analyses on clinical samples of body fluids and the like the analytical reaction is carried out by contacting the sample with a color-forming analytical reagent that is immobilized on a thin rigid substrate resembling a microscope slide. The intensity of the colored spot formed on the slide, which is related to the concentration of the analyte in the sample, is determined by conventional colorimetric or spectrophotometric techniques. The analytical slides conventionally comprise a relatively thin planar substrate, which may be transparent, upon which one or more analytical layers have been coated. The layers comprise compositions containing inert carrier components such as natural or synthetic polymers, e.g., gelatin, and active ingredients which react with the analyte in the analytical sample to generate a color.

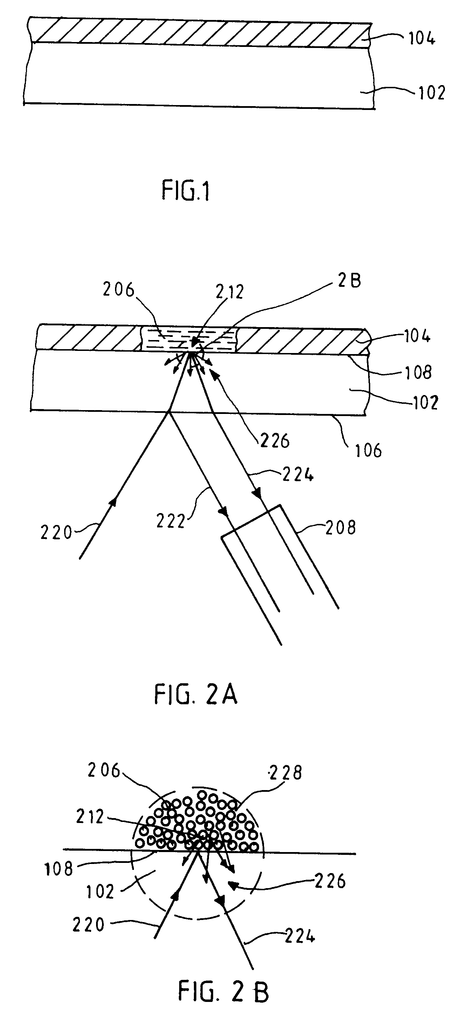

The determination of the color developed in the assay is most often carried out by reflection colorimetry, wherein a beam of light is directed at the colored spot and the intensity of the reflected light at one or more selected wavelengths is measured. When the incident light is directed through the transparent substrate of the analytical slide specular reflection of some of the incident light at the surfaces of the substrate can cause problems. As is well understood in physical optics, when a beam of light is incident on a surface separating two regions of differing refractive index, some of the incident light is in general reflected from the surface. The amount of reflected light is dependent on the polarization of the incident light, the angle of incidence and the difference between the refractive indices of the two media. In conventional automated analyzers, the incident light that is specularly reflected light from the surfaces of the substrate can enter the colorimetric or spectrophotometric section of the apparatus along with the analytical signal light diffusely reflected from the analytical spot. When the analytical reflected signal is small, the specularly reflected incident light may amount to a substantial fraction of the analytical signal. Accordingly, the signal-to-noise ratio of the signal received by the detector is degraded and the accuracy of the analytical measurement suffers. The problem presented by analytical slides of the prior art is illustrated in Figures 1, 2A and 2B. Figure 1 shows an elevational cross section of an analytical slide of the prior art including those elements of the slide that are relevant to the problem of specularly reflected incident light. As shown in Figure 1, such a slide comprises a transparent substrate 102, which may be made of glass or a transparent synthetic resin material capable of transmitting light of the wavelengths used in the analysis. Superimposed on the substrate 102 is an analytical layer 104, which contains appropriate reagents for developing a color when it is contacted with a solution containing the analyte. The analytical slide frequently contains additional reagent layers to perform preliminary reactions on the sample and one or more spreading layers to distribute the sample uniformly over at least the central region of the slide.

Figure 2A shows the analytical slide of the prior art with an analytical sample in place for analysis showing the substrate 102 and the analytical layer 104, moistened by an analytical sample 206. The reagents present in the analytical layer 104 react with the analytical sample 206 to develop the color to be measured. Conventionally, in automated analyses conducted on analytical slides, the intensity of the color is measured by reflection colorimetry or spectrophotometry. Accordingly, the analytical layer also contains a particulate material to reflect the incident analytical light beam. The analytical light beam is represented in Figure 2 by a ray 220 thereof which is incident on surface 106 of the transparent substrate 102. Most of the light passes through the surface 106 with refraction as shown, while some of the light is reflected along path 222. The amount of light reflected is determined, as is well understood, by the difference between the refractive indices of air and of the material of which the substrate 102 is made and the angle of incidence of the ray 220 on the surface 106. After transversing the thickness of the substrate 102, the ray 220 impinges upon the second major surface 108 of the substrate 102. Again, a portion of the ray 220 is reflected as ray 224 with the intensity being determined by the angle of incidence of ray 220 on the surface 108 and the difference between the refractive index of the substrate 102 and that of the liquid of the analytical sample 206, which will generally be an aqueous solution having a refractive index essentially the same as that of water. A portion of the ray 220 passes through the surface 108 and is diffusely reflected by the particles in the analytical layer 104 in the small volume 212 adjacent to the substrate surface 108. The scattering of the ray 220 as it penetrates into the analytical sample 206 is illustrated in more detail in Figure 2B. The ray 220 encounters many of the particles 228, each coated with a colored reaction product of the analytical reaction. At each encounter the ray is reflected with some absorption of the incident light by the colored surface of the particles 228. Because of the random distribution of the particles 228, the ray 220 undergoes a tortuous path within the small volume 212 of the sample 206. Some of the light incident in ray 206 eventually finds its way back to the surface after multiple reflections and issues from the surface 108. Because each of the rays in the incident beam encounters a different arrangement of particles 228, the beam issues from the surface 108 in many directions as the scattered rays 226. As will be understood by those skilled in the art, the depth of penetration of the ray 220 into the analytical layer 104 will in generally be very small, because the scattering particles will be densely packed in the analytical layer 104. Accordingly, the scattering volume 212 will be very thin, and the ray 220 will appear to be scattered substantially at the surface 108 in a drawing on the scale of Figure 2A. Some of the diffusely reflected light will be absorbed by the colored product of the analytical reaction. Accordingly, the diffusely reflected light will contain spectral information characteristic of the concentration of the analyte in the sample 206. The diffusely reflected light will be scattered in many directions as indicated by the arrows at 226. Only that portion of the diffusely reflected light that travels in the same general direction as the ray 224 will enter the spectrophotometric analyzer (not shown) through its entrance aperture, schematically indicated at 208. Hence a great portion, and perhaps the greater part, of the diffusely reflected light is lost and only a relatively small portion is available for the colorimetric or spectrophotometric analysis. The specularly reflected rays 222 and 224 also, in general, have an intensity that is a small fraction, typically a few percent, of that of the incident ray 220. However, for some samples, especially when the amount of analytical reflected light is small, the specularly reflected light may represent a substantial fraction of the light received by the analytical apparatus. Under these circumstances the analytical signal, represented by the difference between the signal from a blank slide and the signal from a sample slide, may be relatively small. As a result, the specularly reflected light may represent a substantial noise component in the signal, thereby causing reduced precision of the measurement.

Another problem that can arise with the analytical slides, especially those having a synthetic resin substrate, is a distortion of the substrate that occurs when the liquid sample is placed on the slide. The wetting of the analytical layer and the adjacent surface of the substrate may introduce forces due to the swelling of the layer and/or surface tension of the liquid that cause the substrate to be slightly warped from its original planar shape into some slightly curved configuration. The curvature of the substrate surface may direct the specularly reflected component of the incident beam at a slightly different angle than the planar surface of the unwetted substrate. Inasmuch as the deviation from planarity introduced by the sample liquid will, in general, differ from slide to slide, the amount of specularly reflected incident light that reaches the spectrophotometer may vary from sample to sample. This variation makes it more diffiult to correct for specular reflection by simply subtracting the signal of a blank slide from that of an analytical slide.

U.S. Patent 3,736,047, to Gelber et al., discloses a liquid crystal display device comprising front and rear plates made of a transparent material, e.g., glass, confining a liquid crystal substance between them. The front plate, through which the display is viewed, is provided with an antireflection layer on the surface facing the viewer, i.e., the air-glass interface, and a combination antireflective and imagewise conductive layer on the surface adjacent the liquid crystal material, i.e., the glass-liquid crystal interface. In the embodiment disclosed, the air-glass antireflection layer is a three-layer coating wherein the layers have defined refractive indices. The glass-liquid crystal antireflection layer is also a three-layer structure with the layer adjacent to the liquid crystal being made from a transparent electrically conductive material such as tin oxide or indium oxide. The electrically conductive layer is divided into segments individually supplied with electrical connections whereby they can be separately charged to make the liquid crystal layer transparent or opaque. The remaining two layers are selected to provide a reflectance that matches that of the conductive layer, so that the segments of the conductive layer are not visible in the absence of an actuating signal. The specification discloses that the antireflection layer on the front of the display increases the contrast. There is, however, no teaching in this patent of the problem of specular reflections from a substrate of a diffusely reflecting analytical slide, nor of how that problem might be solved.

U.S. Patent 4,609,267, to Deguchi et al., discloses a lens made of a synthetic resin material provided with a hard scratch-resistant coating. In order to reduce reflections at the surface of the lens, an antireflection layer is provided at the interface between the hard coating and the air as well as at the interface between the hard coating and the body of the lens. The antireflection layer between the lens and the hard coat is said to decrease the overall reflectivity of the lens surface and reduce the variation of reflectance with wavelength of light. However, this patent does not discuss antireflection coating of diffusely reflective materials, nor is the disclosure concerned in any way with analytical slides.

Hence, a need has continued to exist for an analytical slide which minimizes interference with the analytical reflection signal caused by reflection at the surface of the slide substrate.

## SUMMARY OF THE INVENTION

This problem has now been solved by the antireflection substrate of this invention which comprises a planar transparent support for an analytical slide having on one major surface thereof an antireflection coating adapted to minimize reflection at an air-substrate interface and on the other major surface thereof a second antireflection coating adapted to minimize reflection at an analytical solution-substrate interface. The invention also comprises analytical slides comprising the antireflection coated substrate and one or more analytical layers superimposed on the substrate and performing functions of imbibing the analytical sample, spreading the sample and reacting with the analyte therein to develop a colored spot on the slide.

Accordingly, it is an object of this invention to provide an improved analytical slide for automated clinical analyzers.

A further object is to provide an analytical slide for optical readout of test results.

A further object is to provide an analytical slide having a transparent substrate having antireflection layers.

A further object is to provide an analytical slide having a transparent substrate with reflection-minimizing layers optimized to reduce reflections both at the air-substrate interface and the analytical solution-substrate interface.

A further object is to provide an analytical slide that is less subject to errors introducing by deviations of the substrate from planarity.

Further objects will become apparent from the description of the invention which follows.

## BRIEF DESCRIPTION OF THE DRAWINGS

Figure 1 shows an elevational cross section of an analytical slide of the prior art.

Figure 2A shows an elevational cross section of an analytical slide of the prior art with an analytical sample in place and the direction of the analytical beam indicated.

Figure 2B shows a detailed elevational cross section of the designated region of the slide illustrated in Figure 2A.

Figure 3 shows an elevational cross section of an analytical slide of this invention.

Figure 4A shows an elevational cross section of an analytical slide of the invention with an analytical sample in place, indicating the direction of the analytical light beam.

Figure 4B shows a detailed elevational cross section of the designated region of the slide illustrated in Figure 4A.

## DETAILED DESCRIPTION OF THE INVENTION AND PREFERRED EMBODIMENTS

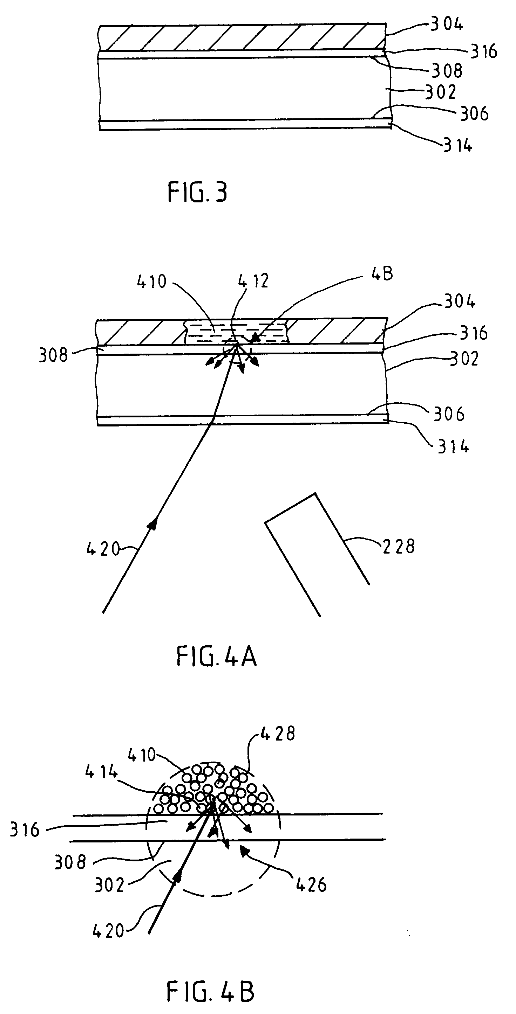

The analytical slide of the invention, as illustrated in cross-section in Figure 3, comprises a substrate 302 having major surfaces 306 and 308, upon one major surface of which is coated or supported an analytical layer 304. The analytical layer 304 is entirely conventional, and is typically a bibulous material containing one or more reagents that react with the analyte in the sample to produce a colored spot. As discussed above, other auxiliary reagent layers or spreading layers may also be present on the analytical slide of the invention.

Both major surfaces 306 and 308 of the slide of the invention are coated with antireflection layers 314 and 316, respectively. The antireflection layer 314, coated on the surface 306 of the substrate 302 that is adjacent to the air has a thickness and refractive index chosen to minimize reflection at the air-substrate interface. The antireflection layer 316, coated on the surface 308 of the substrate 302 that is adjacent to the analytical layer has a thickness and refractive index chosen to minimize reflection at the analytical solution. In practice, since most analytical solutions are relatively dilute aqueous solutions having a refractive index not significantly different from that of water, the antireflection coating 316 adjacent the analytical layer 304 is to be chosen to minimize reflection at an interface between the substrate and water. However, it is to be understood that, although the invention will be described below in connection with aqueous analytical solutions, the invention is generally applicable to analytical slides intended for use with analytical methods employing solvents having refractive indices substantially different from that of water. Thus, if the analytical reaction is conducted in a non-aqueous solvent such as ethanol, methanol, acetone or a chlorinated solvent, or a mixed solvent such as ethanol-water, the refractive index of the particular solvent used will be considered in designing the antireflection layer on the surface of the substrate that contacts the analytical solution.

The operation of the analytical slide of the invention is illustrated in Figures 4A and 4B. A ray 420 of the analytical light beam is incident on the surface 306 of substrate 302 that is coated with antireflection layer 314. The ray 420 is refracted at surface 306, but because of the presence of the antireflection layer 314 little or no light is specularly reflected at the surface. Similarly at surface 308 of the substrate 302 the incident ray is refracted as it enters the analytical sample 410, but little or no light is specularly reflected. The analytical ray is thereupon diffusely reflected and scattered by the particles in the small volume 412, producing diffusely reflected light indicated by the arrows at 426. Figure 4B is a more detailed schematic illustration of the scattering of the ray 420 as it penetrates into the analytical sample 410. The actual scattering of the incident ray within the sample volume proceeds in the same way as in the case of the previously known analytical slides discussed above. The ray 420 encounters many of the particles 428, each coated with a colored reaction product of the analytical reaction. At each encounter the ray is reflected with some absorption by the particles 428. After multiple reflections within the small volume 412 of the sample 410, some of the light in the incident ray 420 eventually traverses the antireflection layer 316 and issues from the surface 308. Rays closely adjacent to the incident ray 420 encounter a different arrangement of particles 428, and accordingly issue from the surface 308 in other directions, the general effect being shown as the scattered rays 426. Again, as in Figure 2A, the penetration of the ray 420 into the analytical layer 304 is very slight and, accordingly, is not noticeable at the scale of Figure 4A. Because the specular reflection at surfaces 306 and 308 is suppressed by the antireflection coatings, the portion of the diffusely reflected light 426 that is scattered in the general direction of the entrance aperture 228 of the spectroscopic equipment is not accompanied by specularly reflected components of the incident ray 420. Accordingly, the signal-to-noise ratio of the signal is improved and the precision of the analysis may be expected to be improved as well. While Figure 4A shows the total absence of specularly reflected beams, it will be understood that the antireflection properties of practical materials are not perfect. Accordingly, in practice some specularly reflected light from the incident beam may reach the spectral analysis equipment. However, the provision of antireflection layers on both the substrate-air and substrate-sample interfaces causes a substantial reduction in the amount of specularly reflected light and thereby reduces the effect of these interfering beams.

The substrate 302 may be made of any material transparent to the radiation of the analytical beam that has sufficient strength for a practical support for an analytical slide. Thus, the substrate may be a thin glass slide similar to a microscope slide. However, it is preferred to make the substrate from a synthetic resin that is less brittle than glass. Thus the substrate may be made of a thin rigid plate of a synthetic resin material, such as poly(methylmethacrylate), polystyrene, polyethylene terephthalate, polycarbonate, or the like. A preferred substrate is a thin layer of polyethylene terephthalate, having a thickness great enough to provide sufficient rigidity to the slide for handling by an operator or by the sample handling mechanism of an automated analytical instrument.

The technology for designing and forming an antireflection layer on a transparent substrate is well known. The layer is made of material having a refractive index intermediate between that of the substrate and the surrounding medium and the thickness of the layer is chosen to be one-fourth wavelength of light at the wavelength for which reflection is to be minimized. Ideally, the refractive index of the antireflection material $n_2$ is chosen to be related to the refractive indices of the transparent substrate $n_3$ and the surrounding medium $n_1$ by the relationship

$$n_2 = \sqrt{n_1 n_3} . \quad (1)$$

When one of the media is air, having a refractive index essentially equal to 1.00, the ideal condition is generally impractical to achieve because of the limited choice of materials that can serve as the antireflection coating. For glass substrates, which might typically have a refractive index of about 1.52, the ideal refractive index for the antireflection coating may be calculated by equation (1) to be about 1.23. However, there are no materials having such a low refractive index that also have the requisite transparency, hardness and durability for an antireflection coating. The practical materials with the lowest refractive indices are cryolite and magnesium fluoride having refractive indices of about 1.35 and 1.38 respectively. Fluorocarbon polymers also have refractive indices in the neighborhood of 1.35. Accordingly, a compromise is generally reached between the requirements of refractive index and the physical properties of the antireflection material, such as its hardness, durability and the ease with which it may be applied to the substrate. Suitable materials for antireflective coating on glass include magnesium fluoride and the like.

Some synthetic resins, e.g., poly(methyl methacrylate) (refractive index = 1.49), have a refractive index not much different from that of glass. On such substrates the same materials can be used for antireflection layers as on glass. Other synthetic resins may have a higher refractive index; for example poly(ethylene terephthalate) has a refractive index of about 1.63. However, the ideal refractive index for an antireflection coating on poly(ethylene terephthalate) is calculated by equation (1) to be about 1.28. This is still lower than the refractive index of practically available materials. Therefore the same antireflection coating materials can be used at the air-substrate interface on synthetic resin substrate as for glass substrates.

For the substrate-analytical sample (water) interface the optimum refractive index for the antireflection layer, calculated by equation (1) above would be about 1.42 for glass and 1.47 for poly-(ethylene terephthalate). For this interface silicon monoxide or silicon dioxide could be used as an antireflection layer. The refractive index of silicon dioxide is about 1.45 and that of vacuum-deposited silicon monoxide can be varied from about 1.45 to about 1.90 by varying the partial pressure of oxygen in the deposition chamber during the deposition. Certain synthetic polymers also have suitable refractive indices, for example, poly(vinylidene fluoride) (1.42), polyacetal resin (1.48), or poly(methyl methacrylate) (1.49). When analytical solutions using solvents other than water are to be employed with the analytical slide of this invention the refractive index of the antireflection layer may differ from that used with an aqueous analytical solution. In all cases the principles discussed above may be applied to calculate the optimum refractive index for the antireflection layer and select a suitable material for its fabrication.

Methods of coating silicon monoxide and silicon dioxide on transparent synthetic resin substrates are well known in the art and are disclosed, for example, in Onoki et al., U.S. Patent 4,130,672, and Sakurai et al., U.S. Patent 4,497,539. Methods of depositing an antireflection coating on a synthetic resin substrate from a liquid solution are also known and are disclosed, for example, in Taniguchi et al., U.S. Patent 4,509,117. Mixtures of materials having different refractive indices may also be deposited, e.g. mixtures of magnesium fluoride and silicon dioxide, to provide a desired refractive index as disclosed, for example, in Ichikawa, U.S. Patent 4,599,272. The techniques of preparing antireflection-coated transparent substrates have been developed commercially and suppliers of such materials are available, e.g., Optical Coating Laboratory, Inc. of Santa Rosa, California/USA.

Multiple layer coatings can also be used to achieve lower reflectances than single layer coatings and will provide more uniform antireflective properties over a wide range of wavelengths, as is well known in the art. Such multiple layer coatings can be used in the analytical slides of this invention, although multiple coating tends to increase the cost of the slide.

Although the invention has been described above in connection with an analytical slide that develops a color observed by reflection through a transparent substrate, the dual antireflection-coated elements of the invention are also useful if the developed color is observed by transmission of light through the slide. Similarly if the developed color is viewed through a cover slip placed on top of the analytical layer, the advantages of the invention can be secured by employing a cover slip having a dual antireflection coating as discussed above.

From the above description it will be apparent that the analytical slide of the invention provides improved precision and accuracy in spectrophotometric measurement of concentrations of analytes by reason reduced specular reflection of incident analytical radiation at the surfaces of the substrate whereby the noise introduced by the presence of this reflected radiation and the variation thereof due to possible distortion of the substrate surfaces is reduced.

The invention having now been fully described, it should be understood that it may be embodied in other specific forms or variations without departing from its spirit or essential characteristics. Accordingly, the embodiments described above are to be considered in all respects as illustrative and not restrictive, the scope of the invention being indicated by the appended claims rather than the foregoing description, and all changes which come within the meaning and range of equivalency of the claims are intended to be embraced therein.

## Claims

1. A support element for an aqueous liquid analytical sample to be analyzed by reflection spectrophotometry comprising:
   a support layer transparent to analytical radiation having a first major surface and a second major surface,
   a first antireflection layer coated on said first major surface of said support layer, said first antireflection layer being optimized for reducing the reflection of said analytical radiation at an interface between air and said support layer,
   a second antireflection layer coated on said second major surface, said second antireflection layer being optimized for reducing the reflection of said analytical radiation at an interface between said support layer and an analytical solution.

2. The support element of Claim 1 wherein said second antireflection layer is optimized for reducing the reflection of said analytical radiation at an interface between said support layer and an aqueous analytical solution.

3. The support element of Claim 1 wherein said support layer is made of glass.

4. The support element of Claim 1 wherein said support layer is made of a synthetic resin.

5. The support element of Claim 3 wherein said support layer is made of polyethylene terephthalate.

6. An analytical element for a dry clinical analyzer comprising

a support layer transparent to analytical radiation having a first major surface and a second major surface,

a first antireflection layer coated on said first major surface of said support layer, said first antireflection layer, being optimized for reducing reflection of said analytical radiation at an interface between air and said support layer,

a second antireflection layer coated on said second major surface, said second antireflection layer being optimized for reducing reflection of said analytical radiation at an interface between said support layer and an aqueous analytical solution, and

a bibulous analytical layer coated on said second antireflection layer.

7. The analytical element of Claim 6 wherein said second antireflection layer is optimized for reducing the reflection of said analytical radiation at an interface between said support layer and an aqueous analytical solution.

8. The analytical element of Claim 6 wherein said support layer is made of glass.

9. The support element of Claim 6 wherein said support layer is made of a synthetic resin.

10. The support element of Claim 9 wherein said support layer is made of polyethylene terephthalate.

FIG.1

FIG. 2A

FIG. 2 B

304
316
308
302
306
314

FIG. 3

410    412    4B
304
316
308    302
306
314
420    228

FIG. 4A

428
410
414
316
308
302
426
420

FIG. 4B

9